Europäisches Patentamt

European Patent Office

Office européen des brevets

(19)

(11) Publication number: **0 283 325**
**A2**

## EUROPEAN PATENT APPLICATION

(12)

(21) Application number: **88302460.6**

(22) Date of filing: **21.03.88**

(51) Int. Cl.⁴: **H 02 P 7/00**

(30) Priority: **19.03.87 GB 8706574**

(43) Date of publication of application:
**21.09.88 Bulletin 88/38**

(84) Designated Contracting States:
**AT BE CH DE ES FR GB GR IT LI LU NL SE**

(71) Applicant: **Yang, Tai-Her**
**5-1 Taipin Street**
**Si-Hu Town Dzan-Hwa (TW)**

(72) Inventor: **Yang, Tai-Her**
**5-1 Taipin Street**
**Si-Hu Town Dzan-Hwa (TW)**

(74) Representative: **Arthur, Bryan Edward et al**
**Withers & Rogers 4 Dyer's Buildings Holborn**
**London EC1N 2JT (GB)**

(54) **Reversible drives, and ventilating fans employing such drives.**

(57) A periodically-reversing electric drive consists of a single-phase split-phase capacitor starter motor (M1) in combination with a bi-metal type charger switch (SW2). The switch initially causes input power to be applied to the running winding, and the capacitor provides out-of-phase power to the starting winding. When the bi-metal heats up the switch changes over, the starting winding now acting as the running winding, and vice versa. The bi-metal then cools, the switch changes back, and the cycle repeats.

A ventilator motor driven by such a device tends to eliminate dead spaces and improve ventilation.

FIG. 1

EP 0 283 325 A2

## Description

This invention relates to an electric drive which reverses direction periodically and which has particular application to ventilating fans.

For some applications it is desirable to have a drive which reverses its direction of rotation periodically, and it may often be unnecessary for the timing of the periods to be precisely controlled. It is an object of the invention to provide a drive of this kind which is simple and reliable, and inexpensive to construct. A further object of the invention is to improve the comfort of rooms, and this is achieved by using the reversible drive to drive a ventilating fan so that it reverses its direction of rotation periodically.

The invention is defined in the claims appended hereto. Examples of the invention will be described with reference to the accompanying drawings, in which:

Figure 1 is a circuit diagram of a drive according to the invention for driving a ventilating fan;

Figure 1-1 is a modification employing a motor of higher rating than is suitable for use in the example of Figure 1, and,

Figures 2 to 5 show diagrammatically the application of the invention to the ventilation of rooms.

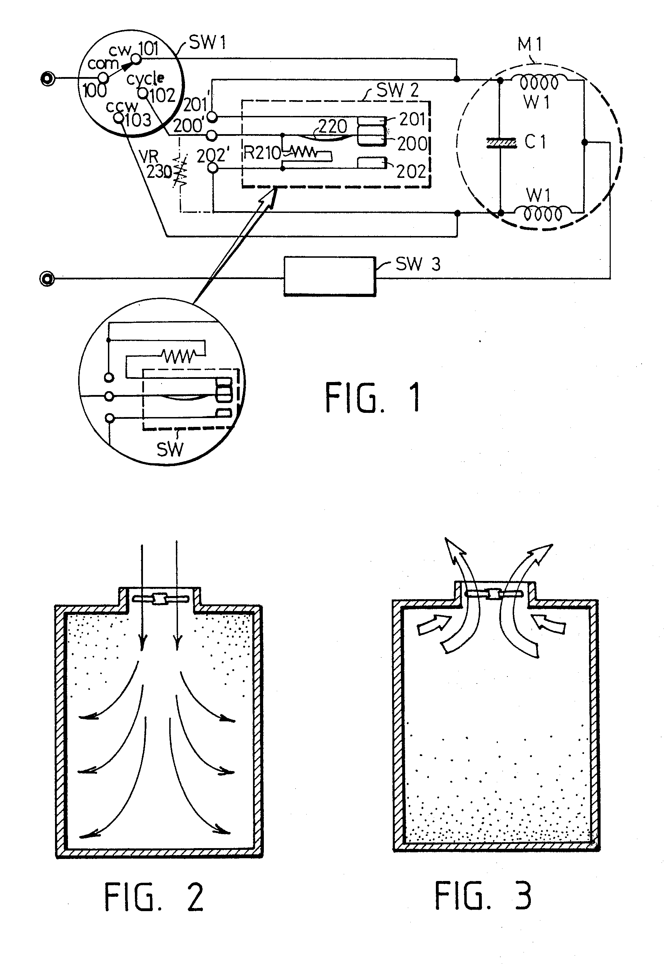

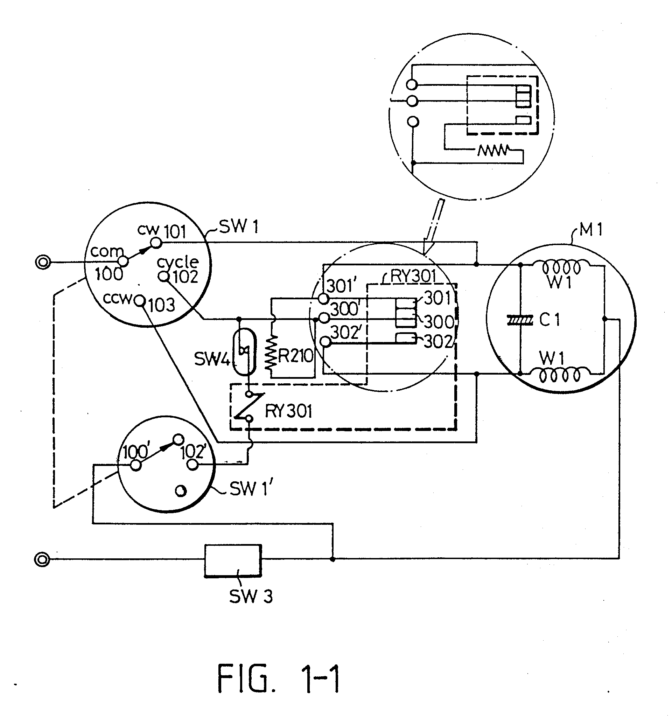

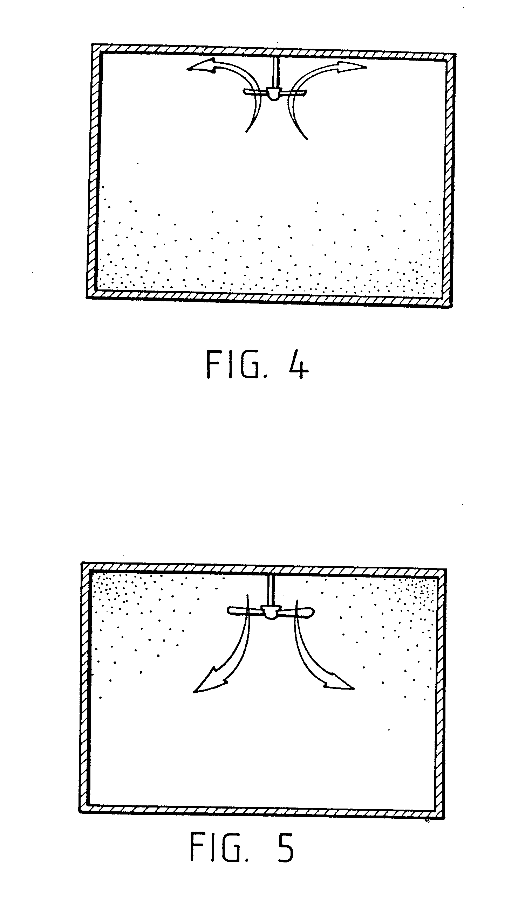

The drive circuit, which is shown in Figure 1 and described more fully below, is particularly suitable for driving a ventilating fan, as indicated diagrammatically in Figures 2 to 5, to which reference should be made.

As is well-known, cool air descends and warm air rises, and the distance between the air conditioning equipment (air conditioner or heater) will cause a temperature difference, which may be reduced by using a ceiling fan to stir the air. In summer, the fan draws the cool air upward, in winter the warm air is blown downwards. The room temperature can thus be kept uniform. However, because of the shape of the room, there are still some dead spaces where the air does not circulate. The same situation exists with a ventilator or draft fan. By periodic reversal of the fan, the circulation extends into the dead spaces, and a more even temperature distribution results.

Referring again to Figure 1, a split-phase motor M1 has a running winding W1 and a starting winding W1′ and is provided with a phase-splitting capacitor C1. Preferably the windings are similar, in which case the clockwise/counter-clockwise output horse powers are same;

If the windings are different the output horse powers are different One end of each winding is connected to the power source through a speed control switch SW3. The other ends of the windings are each connected to one terminal of the phase splitting capacitor C1, and each is then separately connected to a fixed control of a thermal switch SW2.

The thermal switch has a bi-metal step 220, a normally-open contact 202, a normally-closed control 201 and a common contact 200 and the switch is serial connected between its pin 200′. The limited step will connect the contacts 200 and 201 at the normal temperature, and when it is heated to the saturate temperature, it changes over to connect the contacts 200 and 202 and cut off the connection to the contact 201. A heater resistor R210 is connected in parallel across the terminals 202′ and 200′.

For periodically reversing operation power is applied to the terminal 200′, and, initially via the contact 200 and 201 to the running winding W1. The capacitor C1 applies out-of-phase power to the started winding W1′, and the motor starts and drives the fan counter-clockwise. The resistor R210 meanwhile heats the bi-metal 220, and after a while this causes the switch contacts to change over. This now causes the supply voltage to be switched to the starter winding W1′ which acts as the running winding, the original running winding being supplied out-of-phase by the capacitor C1, and causing the motor to re-start in the clockwise direction. Power is cut off from the resistor R210 and the bi-metal cools down until the change-over contacts switch track and the cycle is repeated. Optionally, a variable resistor VR 230 may be included in series or in parallel with R210 to allow the timing to be adjusted.

A function selection switch SW1 allows a power supply to be connected to the terminal 200′ for reversible running as described or to either 201′ or 202′ for continuous counter-clockwise or clockwise running.

Figure 1-1 is a modification of the circuit of Figure 1 which allows the use of a motor of higher rating. In this circuit, the bi-metal switch SW2 is replaced by a relay RY301 having fixed contacts 301, 302, and a changeover contact 300. The operating coil of the relay is switched by a sealed bimetal on-off switch SW4 heated by the heating resistor R210. Additional contacts 100′,102′, on the switch SW1 are required to isolate the relay operating coil for continuous running in either direction.

In another example, a speed control switch SW3 can be included to enable the motor speed to be varied.

## Claims

1. A periodically-reversing electric drive comprising a single-phase capacitor-start motor (M1) in combination with a thermally-driven change-over switch (SW2) the switch having connected so as to cause input power to be applied alternately to the running and the starting windings (W1,W1[1]) of the motor, so that driving one phase of the switching cycle the motor operates normally, and during the other phase the starting winding functions as the running winding, and vice versa.

2. A periodically-reversing electric drive according to claim 1 in which the starting winding and the running winding are similar.

3. A periodically-reversing electric drive according to claim 1 or claim 2 further including a selector switch (SW1) whereby the drive may be selected to reverse periodically, or to run continuously in a forward or a reverse direction.

4. A periodically-reversing electric drive according to any preceding claim in which the thermally-driven changeover switch is a heater bi-metal switch.

5. A periodically-reversing electric drive according to any of claims 1 to 3 in which the thermally-driven changeover switch comprises a thermal on/off switch controlling the energising winding of a change-over relay.

6. A ventilating fan driven by an electric drive according to any preceding claim and arranged to reverse its direction of rotation periodically.

0283325

FIG. 1

FIG. 2

FIG. 3

FIG. 1-1

0283325

FIG. 4

FIG. 5